# EUROPÄISCHE PATENTSCHRIFT

(11) **EP 1 350 656 B1**
(45) Veröffentlichungstag und Bekanntmachung des Hinweises auf die Patenterteilung: **21.05.2008**
(21) Anmeldenummer: 03006519.7
(22) Anmeldetag: 22.03.2003
(51) Int. Cl.: B60K 31/08, A01D 41/127

(54) **Fahrantrieb für landwirtschaftliche Erntemaschine mit Steuerung der Fahrgeschwindigkeit bei Strassenfahrten**
Drive for agricultural harvesting machine with control of the road speed
Entraînement pour une machine agricole récolteuse avec commande pour la vitesse de routes

(30) Priorität: 03.04.2002 DE 10214598
(43) Veröffentlichungstag der Anmeldung: 08.10.2003
(73) Patentinhaber: CNH Belgium N.V., 8210 Zedelgem (BE)
(72) Erfinder: Mende, Ingo, Dipl.-Ing., 01277 Dresden (DE); Scholtke, Henri, Dipl.-Ing., 02692 Obergurig (DE)
(74) Vertreter: Feldkamp, Rainer

(56) Entgegenhaltungen:
- EP-A- 0 408 170
- DE-A1- 19 852 039
- FR-A- 2 103 203

## Beschreibung

Die Erfindung betrifft einen Fahrantrieb für eine landwirtschaftliche Arbeitsmaschine, insbesondere für eine selbstfahrende Erntemaschine, mit Steuerung der Fahrgeschwindigkeit durch Drehzahlanpassung zum vorausschauenden Fahren bei Strassenfahrten, nach den Merkmalen im Oberbegriff des Patentanspruchs 1.

Aus der Offenlegungsschrift DE 199 21 697 A1 ist ein Verfahren und eine Vorrichtung zur Drehzahlvorgabe an einem Antriebsmotor an einer Arbeitsmaschine bekannt, die durch die Verwendung der Vorgabe der Fahrgeschwindigkeit bei Transport- oder Strassenfahrt zur Bestimmung der Drehzahlvorgabe für den Antriebsmotor gekennzeichnet ist. Diese Drehzahlvorgabe erfolgt entsprechend der Stellung eines die Fahrgeschwindigkeit der Arbeitsmaschine vorgebenden Fahrhebels. Eine Automatik hält diese voreingestellte Fahrgeschwindigkeit bei stärkerer Belastung der Maschine durch Regelung der Leistung des Antriebsmotors ein. Eine Geschwindigkeitsänderung wird durch Verstellen des Fahrhebels erreicht. Dazu muß die Hand vom Lenkrad genommen werden. Vorwärts- und Rückwärtsfahren und die Geschwindigkeit werden über den Fahrhebel gewählt, welcher die Verstelipumpe mechanisch oder über eine Elektronik ansteuert. Die EP-A-0 408 170 zeigt die Merkmale des Oberbegriffs des Anspruchs 1.

Aufgabe der Erfindung ist es, einen Fahrantrieb für eine landwirtschaftliche Arbeitsmaschine mit Steuerung der Fahrgeschwindigkeit bei Strassenfahrten mit zentralem Antrieb für alle Arbeitsgänge und einer Steuerung der Geschwindigkeit bei Strassenfahrten durch Steuerung des zentralen Antriebs zu finden.

Die Lösung dieser Aufgabe ist Gegenstand der im ersten Anspruch offenbarten Erfindung. Weitere zweckmäßige Ausgestaltungen der Erfindung sind Gegenstand der Unteransprüche.

Bei dem erfindungsgemäßen Fahrantrieb für eine landwirtschaftliche Arbeitsmaschine mit Steuerung der Fahrgeschwindigkeit bei Strassenfahrten mit einem Dieselmotor als zentrale Antriebsquelle, einer Verstellpumpe und mindestens einem Hydraulikmotor ist das Fördervolumen der Verstellpumpe und damit die Fahrgeschwindigkeit bei Strassenfahrt von der aktuellen Stellung eines Gaspedals abhängig. Die Drehzahl des Dieselmotors wird über ein elektronisches Gaspedal gesteuert. Der Fahrantrieb hat einen Dieselmotor als zentrale Antriebsquelle für alle Arbeitsgänge der Arbeitsmaschine, eine elektrisch in ihrem Fördervolumen verstellbare mit dem Dieselmotor antriebsmäßig verbundene Verstellpumpe, einen elektrohydraulisch in seinem Schluckvolumen verstellbaren Motor und zwei elektrohydraulisch in ihrem Schluckvolumen schaltbare Motoren. Die Drehzahlanderungen werden über die aritriebsmäßige Verbindung Dieselmotor/Verstellpumpe übertragen. Der Regelbereich des Dieselmotors beginnt bei sehr niedriger Leerlaufdrehzahl von 500 U/min. Die gewünschte Fahrt vorwärts oder rückwärts wird durch Umlegen des Fahrhebels bestimmt. Wird die Dieselmotordrehzahl durch Betätigen des Gaspedals erhöht, wird die Drehzahländerung elektronisch mit Drehzahlaumehmer gemessen. Sie kann auch hydraulisch über eine Düsenkömbination in der Verstellpümpe gemessen werden. Wird ein bestimmter Totbereich, der Sicherheit gegen ungewollte Verfahrbewegung gibt, über der Leerlaufdrehzahl überschritten, wird das Fördervolumen der Verstellpumpe entsprechend der gemessenen Drehzahländerung vergrößert und die Erntemaschine fährt entsprechend der Stellung des Fahrhebels an. Wird die Drehzahl durch Betätigen des Gaspedals abgesenkt, wird das Verdrängungsvolumen der Verstellpumpe entsprechendder gemessenen Drehzahl verkleinert. Somit ergibt sich immer eine der Gaspedalstellung entsprechende Geschwindigkeit. Durch die nacheinander erfolgende Verstellung der Verstellpumpe von kleinem auf großes Fö'rdervolumen und die Verstellung des Motors von großem auf kleines Schluckvolumen ergibt sich ein entsprechend großer Wandlungsbereich von Drehmoment und Fahrgeschwindigkeit. Der Verstellmotor wird über eine interne Druckmessung ab einem einstellbaren Druck automatisch auf großes Schluckvolumen verstellt, um hohe Momente beim Beschleunigen zu realisieren. Die beiden schaltbaren Motoren werden entsprechend dem gewählten Geschwindigkeitsbereich auf kleines oder großes Schluckvolumen geschaltet. Die Beschleunigung des Fahrzeugs kann über die Regelelektronik oder die Veränderung der hydraulischen Düsenkombination abhängig von den Fahrzeugmassen und Anforderungen bestimmt werden. Die Verzögerung des Fahrantriebs erfolgt durch die Verminderung der Dieselmotordrehzahl, wodurch die Verstellpumpe in Richtung minimales Schluckvolumen (durch die gemessene Drehzahländerung) zurückschwenkt und das Fahrzeug abbremst. Der Fahrer kann dabei beide Hände am Lenkrad halten und muß den Fahrhebel nicht mehr betätigen. Wird das Fahrzeug auf diese Weise bis zur Leerlaufdrehzahl abgebremst, kann auch keine ungewollte Verfahrbewegung durch Auslenkung des Fahrhebels auftreten.

Die Erfindung soll nachstehend anhand eines Ausführungsbeispiels näher erläutert werden. Die zugehörige Zeichnung zeigt ein Blockschaltbild des Fahrantriebs für eine landwirtschaftliche Arbeitsmaschine.

An einem als zentrale Antriebsquelle der landwirtschaftlichen Arbeitsmaschine dienenden Dieselmotor 1 ist über eine Zentralwelle 2 eine Verstellpumpe 3 fest angekoppelt. An die Verstellpumpe 3 ist über eine Hydraulikleitung 4 ein Hydraulikmotor 5 angeschlossen, dem ein Fahrwerk 6 folgt. Der Dieselmotor 1 wird entweder direkt über ein mit Federrückstellung versehenes Gaspedal 7 mit einem Bowdenzug oder durch eine zwischengeschaltete Motorelektronik 8 in seiner Drehzahl verstellt. Die Vorgabe der Drehzahl des Dieselmotors 1 erfolgt über das Gaspedal 7. Ein mit dem Gaspedal 7 gekoppeltes Potentiometer 9 dient zur Erzeugung eines der momentanen Stellung des Gaspedals 7 entsprechenden elektrischen Signals, das als proportionales Stellsignal auf die Einspritzpumpe des Dieselmotors 1 übertragen bzw. für die Ansteuerung einer Motorelektronik verwendet wird. Die Drehzahl des Dieselmotors 1 wird damit nicht fest vorgegeben, sondern durch die momentane Lage des Gaspedals 7 bestimmt. Da die Verstellpumpe 3 des Hydraulikmotors 5 an den Dieselmotor 1 fest angekoppelt ist, wird sie mit einem vorgegebenen Verhältnis zur Drehzahl des Dieselmotors 1 von diesem angetrieben.

Die Vorwärts- oder Rückwärtsfahrt des Fahrwerks 6 wird durch die Verstellpumpe 3 mittels eines Fahrtrichtungsventils 10 (vorwärts/rückwärts) eingestellt. Dieses Fahrtrichtungsventil 10 dient im Strassenbetrieb nur zur Festlegung der Vorwärts- oder Rückwärtsfahrt und der maximalen Fahrgeschwindigkeit. Das Fahrtrichtungsventil 10 wird über einen Fahrhebel 11 betätigt. Dabei bleibt eine Ansteuerelektronik 12 in ihrer Ausgangsstellung. Der Verstellpumpe 3 ist eine Pumpensteuerung zugeordnet, der ein hydraulisches Regelventil 13 und eine Speisepumpe 14 vorgeschaltet sind. Die Speisepumpe 14 ist direkt an die Verstellpumpe 3 angebaut oder in diese eingebaut und wird 1:1 von dieser angetrieben. Sie dient zur Einspeisung in die Niederdruckseite, der Messung der Drehzahl der Verstellpumpe 3 und der Versorgung einer Pumpenverstellung 15 mit Steueröl. Der Förderstrom ist proportional zur Drehzähl des Dieselmotors 1 und stellt damit die veränderliche Größe (Führungsgröße) für die Pumpensteuerung dar.

Das hydraulische Regelventil 13 ist eine Kombination von Blenden, Federn und Regelkolben. Es dient zur Verarbeitung des von der Speisepumpe 14 gelieferten und zu deren Drehzahl proportionalen Volumenstroms (Drehzahlwert) in einen entsprechenden Steuerdruck, der der Pumpenverstellung 15 zugeführt wird. Die Druckdifferenz, die in Abhängigkeit des von der Speisepumpe 14 gelieferten Volumenstroms erzeugt wird, ergibt eine Kraft auf den Regelkolben, der seinerseits den Querschnitt zur Steuerleitung öffnet und damit einen Steuerdruck aufbaut, der zur Pumpenverstellung genutzt wird und der damit gleichzeitig Hochdruck im Kreislauf Fahrantrieb erzeugt. Durch die Wahl der Blenden kann die Kennlinie des Regelventils 13 und damit des Fahrantriebes beliebig angepaßt werden.

Die Blendenkombination wird so gewählt, daß bei Leerlaufdrehzahl des Dieselmotors 1 noch kein Steuerdruckaufbau erfolgt. Erst bei Erreichen einer festgelegten Drehzahl öffnet das Regelventil 13. Die Verstellpumpe 3 beginnt auszuschwenken. Wird die Drehzahl des Dieselmotors 1 weiter gesteigert, ergibt sich eine proportionale Auslenkurig der Verstellpumpe 3. Die Drehzahl, bei der der Steuerdruck seinen Maximalwert erreicht und die Verstellpumpe 3 voll ausgeschwenkt ist, kann entsprechend der gewünschten Kennlinie gewählt werden. Die Kennlinie des Ausschwenkens ist durch eine Steigerung der Drehzahl des Dieselmotors 1 und durch Steigerung des Steuerdrucks bestimmt.

Beides führt zur Drehzahlsteigerung des Hydraulikmotors 5 auf der Abtriebsseite und damit zur Fahrgeschwindigkeitszunahme.

Prinzipiell gilt die Umkehrung für eine Verstellung von hoher zu niedriger Drehzahl. Über das Gaspedal 7 wird eine Drehzahlverringerung des Dieselmotors 1, vorgegeben. Das Fördervolumen der Speisepumpe 14 sinkt proportional mit der Drehzahl. Über das Regelventil 13 fließt ein geringerer Volumenstrom, der seinerseits einen geringeren Druckabfall erzeugt. Der Steuerdruck, der der Pumpenverstellung 15 zugeführt wird, reduziert sich und die Verstellpumpe 3 schwenkt proportional zur Drehzahl des Dieselmotors 1 gegebenerweise ein. Wird die Drehzahl des Dieselmotors 1 bis zur Leerlaufdrehzahl reduziert, schwenkt die Verstellpumpe 3 voll ein und der Hydraulikmotor 5 auf der Abtriebsseite wird zum Stillstand abgebremst.

Mit dem Gaspedal 7 ist damit die Möglichkeit gegeben, jede beliebige Drehzahl innerhalb eines Bereiches anzufahren und in eine entsprechende Fahrgeschwindigkeit umzusetzen. Beschleunigung und Verzögerung des Fahrantriebs für eine landwirtschaftliche Arbeitsmaschine werden nur noch über das Gaspedal 7 gesteuert, wobei die sonst übliche Bedienung mittels Fahrhebel 12 entfällt. Die Bedienung mit dem Gaspedal 7 ermöglicht eine wesentlich dosiertere und vorausschauende Fahrweise. Darüber hinaus wird der Fahrer von der Bedienung des Fahrhebels 12 befreit und hat damit beide Hände zur Betätigung der Lenkung zur Verfügung.

### Bezugszeichenaufstellung

- 1: Dieselmotor
- 2: Zentralwelle
- 3: Verstellpumpe
- 4: Hydraulikleitung
- 5: Hydraulikmotor
- 6: Fahrwerk
- 7: Gaspedal
- 8: Motorelektronik
- 9: Potentiometer
- 10: Fahrtrichtungsventil
- 11: Fahrhebel
- 12: Ansteuerelektronik
- 13: Regelventil
- 14: Speisepumpe
- 15: Pumpenyerstellung

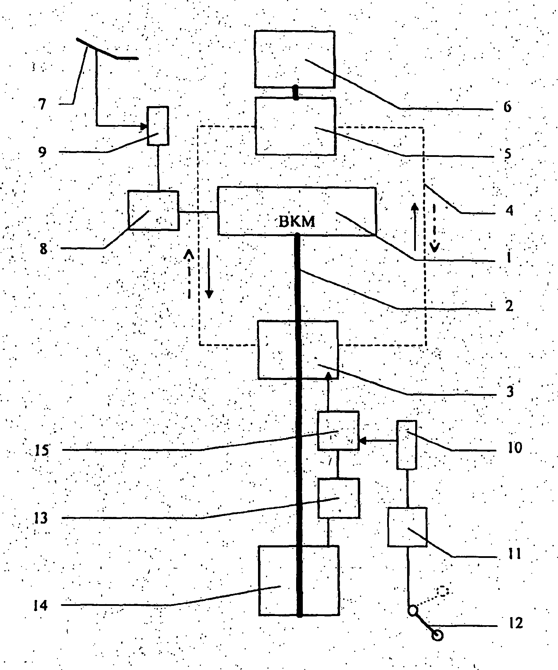

## Patentansprüche

1. Fahrantrieb für eine landwirtschaftliche Arbeitsmaschine mit Steuerung der Fahrgeschwindigkeit bei Straßenfahrten mit einem Dieselmotor (1) als zentrale Antriebsquelle, einer Verstellpumpe (3) und mindestens einem Hydraulikmotor (5), wobei das Fördervolumen der verstellpumpe (3) und damit die Fahrgeschwindigkeit bei Straßenfahrt von der aktuellen Stellung eines Gaspedals (7) abhängig ist und der Fahrantrieb aus einer in ihrem Fördervolumen verstellbaren, mit dem Dieselmotor (1) antriebsmäßig verbundenen Verstellpumpe (3), einem elektrohydraulisch in seinem Schluckvolumen verstellbaren Motor und zwei elektrohydraulisch in ihrem Schluckvolumen schaltbaren Motoren besteht, **dadurch gekennzeichnet, daß** die Drehzahl des Dieselmotors (1) über ein elektronisches Gaspedal (7) steuerbar ist und die Drehzahländerung elektronisch mit einem Drehzahlaufnehmer gemessen und das Fördervolumen der Verstellpumpe (3) entsprechend der gemessenen Drehzahl vergrößert bzw verkleinert wird.

2. Fahrantrieb für eine landwirtschaftliche Arbeitsmaschine nach Anspruch 1, **dadurch gekennzeichnet, daß** Vorwärts- und Rückwärtsfahrt durch die volle Auslenkung des Fahrhebels (11) bestimmt ist.

3. Fahrantrieb für eine landwirtschaftliche Arbeitsmaschine nach Anspruch 1, **dadurch gekennzeichnet, daß** die Drehzahländerung hydraulisch über eine Düsenkombination in der Verstellpumpe (3) gemessen und das Fördervolumen der Verstellpumpe (3) entsprechend der gemessenen Drehzahl vergrößert bzw. verkleinert wird.

4. Fahrantrieb für eine landwirtschaftliche Arbeitsmaschine nach Anspruch 1, **dadurch gekennzeichnet, daß** der Verstellmotor über eine interne Druckmessung ab einem einstellbaren Druck, automatisch auf großes Schluckvolumen verstellt wird.

5. Fahrantrieb für eine landwirtschaftliche Arbeitsmaschine nach Anspruch 1, **dadurch gekennzeichnet, daß** die beiden schaltbaren Motoren entsprechend dem gewählten Geschwindigkeitsbereich auf kleines oder großes Schluckvolumen geschaltet sind.

## Claims

1. A travelling gear for an agricultural working machine with control of the travelling speed when running on roads with a diesel engine (1) as the central source of motive power, a variable displacement pump (3) and at least one hydraulic motor (5), in which the delivery volume of the variable displacement pump (3) and hence the travelling speed when running on the road is dependent upon the current position of an accelerator pedal (7), and the travelling gear comprising of the variable displacement pump (3) adjustable as regards its delivery volume, connected so as to be driven by the diesel engine (1), at least one hydraulic motor (5) including a first electro-hydraulic motor with adjustable induction volume and a second and a third electro-hydraulic motor with switchable induction volumes, **characterized in that**, the speed of the diesel engine (1) is controllable via the electronic accelerator pedal (7) and the change in speed is measured electronically with a speed sensor and the delivery volume of the variable displacement pump (3) is increased or diminished according to the measured speed.

2. A travelling gear for an agricultural working machine in accordance with claim 1, **characterized in that**, forwards and backwards travel is determined through the full excursion of a throttle lever (11).

3. A travelling gear for an agricultural working machine in accordance with claim 1, **characterized in that** the change in speed is measured hydraulically via a nozzle combination in the displacement pump (3) and the delivery volume of the displacement pump (3) is increased or reduced according to the measured speed.

4. A travelling gear for an agricultural working machine in accordance with claim 1, **characterized in that** by means of an internal pressure measurement the variable displacement motor is adjusted automatically to a higher induction volume from an adjustable pressure setting.

5. A travelling gear for an agricultural working machine in accordance with claim 1, **characterized in that**, the second and third electro-hydraulic motors are switched to a small or large induction volume according to a selected speed range.

## Revendications

1. Commande de marche pour une machine de travail agricole avec commande de la vitesse de marche pour des déplacements sur route avec un moteur diesel (1) en tant que source de commande centrale, une pompe à cylindrée variable (3) et au moins un moteur hydraulique (5), le volume aspiré de la pompe à cylindrée variable (3) et donc la vitesse de marche pour des déplacements sur route dépend de la position actuelle d'une pédale d'accélérateur (7) et la commande de marche est constituée d'une pompe à cylindrée variable au volume aspiré réglable, reliée à commande avec le moteur diesel (1), un moteur réglable par voie électro-hydraulique au niveau de son volume d'absorption et deux moteurs commutables par voie électro-hydraulique au niveau de leur volume d'absorption, **caractérisée en ce que** la vitesse de rotation du moteur diesel (1) peut être commandée par une pédale d'accélérateur électronique (7) et la modification de la vitesse de rotation est mesurée électroniquement à l'aide d'un capteur de vitesse de rotation et le volume aspiré de la pompe à cylindrée variable (3) est augmentée ou diminuée en fonction de la vitesse de rotation mesurée.

2. Commande de marche pour une machine de travail agricole suivant la revendication 1, **caractérisée en ce que** la marche avant et la marche arrière sont déterminées par le déclenchement complet de la manette d'accélérateur (11).

3. Commande de marche pour une machine de travail agricole suivant la revendication 1, **caractérisée en ce que** la modification de la vitesse de rotation est mesurée hydrauliquement via une combinaison de buses dans la pompe à cylindrée variable (3) et que le volume aspiré de la pompe à cylindrée variable (3) est augmenté ou diminué en fonction de la vitesse de rotation mesurée.

4. Commande de marche pour une machine de travail agricole suivant la revendication 1, **caractérisée en ce que** le moteur de déplacement est réglé automatiquement sur un grand volume d'absorption au moyen d'une mesure de pression interne à partir d'une pression réglable.

5. Commande de marche pour une machine de travail agricole suivant la revendication 1, **caractérisée en ce que** les deux moteurs commutables sont commutés sur un volume d'absorption petit ou grand conformément au domaine de vitesse sélectionné.
